# EUROPÄISCHE PATENTSCHRIFT

(11) **EP 0 491 240 B1**
(45) Veröffentlichungstag und Bekanntmachung des Hinweises auf die Patenterteilung: **05.07.1995**
(21) Anmeldenummer: 91120871.8
(22) Anmeldetag: 05.12.1991
(51) Int. Cl.: C07F 9/50

(54) **Verfahren zur Herstellung wasserlöslicher sulfonierter Diphosphane**
Process for preparing water soluble sulphonated diphosphanes
Procédé de préparation de diphosphanes sulphonés solubles dans l'eau

(30) Priorität: 17.12.1990 DE 4040314
(43) Veröffentlichungstag der Anmeldung: 24.06.1992
(73) Patentinhaber: HOECHST AKTIENGESELLSCHAFT, 65926 Frankfurt am Main (DE)
(72) Erfinder: Herrmann, Wolgang, Prof. Dr. Dipl.-Chem., W-8050 Freising (DE); Kohlpaintner, Christian, Dipl.-Chem., W-8209 Stephanskirchen (DE); Bahrmann, Helmut, Dr. Dipl.-Chem., W-4236 Hamminkeln (DE)

(56) Entgegenhaltungen:
- EP-A- 0 104 375
- EP-A- 0 133 127

## Beschreibung

Die Erfindung betrifft die Herstellung von Diphosphanen, die sich von Biarylverbindungen ableiten und aufgrund des Vorhandenseins von Sulfonsäureresten im Molekül in Wasser löslich sind.

Komplexverbindungen, die als Zentralatom ein Metall der VIII. Gruppe des Periodensystems der Elemente und als Liganden P(III)-verbindungen wie Phosphane und Phospite und daneben gegebenenfalls noch weitere, zur Komplexbildung befähigte Gruppen enthalten, haben in jüngster Zeit zunehmend als Katalysatoren Bedeutung gewonnen. So erfolgt die technisch in großem Umfang ausgeübte Reaktion von Olefinen mit Synthesegas zu Aldehyden (Hydroformylierung) in Gegenwart von Katalysatorsystemen, die aus Kobalt und insbesondere Rhodium und Triphenylphosphan bestehen. Auch zur Umsetzung von Methanol mit Synthesegas zu höheren Alkoholen, insbesondere Ethanol und Propanol (Homologisierung) haben sich Katalysatoren auf Basis von Phosphane enthaltenden Komplexverbindungen bewährt. Entsprechend der Löslichkeit dieser Katalysatoren in organischen Medien erfolgen die Reaktionen in homogener Phase.

Statt in homogener Phase kann man die Umsetzungen auch in heterogenen Reaktionssystemen durchführen. Vorteil dieser Verfahrensvariante ist die einfache und schonende Trennung des Katalysators, der in Wasser gelöst vorliegt, von dem in Wasser nicht löslichen Reaktionsprodukt. Nach diesem Prinzip arbeitet z.B. das in der DE 27 00 904 C2 beschriebene Verfahren zur Anlagerung von Cyanwasserstoff an eine ungesättigte organische Verbindung mit mindestens einer ethylenischen Doppelbindung. Als Katalysatoren sind für diese Reaktion die Systeme Nickel/TPPTS [TPPTS steht für Tri(sulfophenyl)phosphan], Palladium/TPPTS oder Eisen/TPPTS geeignet. Für die Herstellung von Aldehyden durch Reaktion von Olefinen mit Kohlenmonoxid und Wasserstoff setzt man nach dem Prozeß der DE 26 27 354 C2 Rhodium in metallischer Form oder in Form einer seiner Verbindungen zusammen mit einem wasserlöslichen Phosphan, z.B. TPPTS als Katalysator, ein.

Diphosphane, die als zweizähnige Liganden in der Lage sind, mit Metallionen Chelate zu bilden, finden im Gegensatz zu den Monophosphanen nur selten und dann ausschließlich als Bestandteile homogen gelöster Katalysatoren Anwendung. So erhält man nach der Lehre der DE 29 04 782 C2 Aldehyde durch Hydroformylierung einer niederen olefinischen Verbindung in einem organischen Lösungsmittel in Gegenwart eines Rhodiumkomplexes, eines trisubstituierten Monophosphans und eines Diphosphanalkans.

In der DE 29 09 041 A1 wird ein Verfahren zur Herstellung von Aldehyden durch Hydroformylierung von Olefinen beschrieben, wobei Platin als Katalysator, das Halogenid wenigstens eines Metalles der Gruppe IVB des Periodensystems der Elemente ("Kohlenstoffgruppe") als Hilfskatalysator und ein zweibindiger Ligand der allgemeinen Formel R₂X-Z-Y-Z-XR'₂ (R,R' ist eine Alkyl-, Aryl- oder Aralkylgruppe, X Phosphor, Arsen oder Antimon, Y eine Alkylen-, Arylen- oder Aralkylengruppe und Z eine Methylengruppe oder ein Sauerstoffatom) als Reaktionspromotor zugegen sind. 2,2'-Bis(diphenylphosphinomethyl)-1,1'-binaphthyl wird nach der offengelegten japanischen Patentanmeldung 79/39 059 in Kombination mit einer Rhodium- oder Nickel-verbindung als Ligand für asymmmetrische Hydrierkatalysatoren verwendet.

Eine Ursache für den vergleichsweise seltenen Einsatz von Diphosphanen als Bestandteil von Katalysatoren dürften Schwierigkeiten sein, die ihrer Herstellung im technischen Maßstab entgegenstehen. Zwar sind eine Reihe von Laborverfahren für die Gewinnung von Diphosphanen bekannt, ihre Übertragung in industrielle Produktionen ist jedoch weder technisch noch wirtschaftlich unproblematisch.

Ein Prozeß, der unter anderem die Herstellung von Diphosphanen - sie finden als zweizähnige Phosphorliganden Anwendung - betrifft, ist Gegenstand der EP 03 26 286 A1. Als Ausgangsstoffe werden Biarylverbindungen eingesetzt' die in jeder der beiden Arylgruppen durch den Rest -CH(R₃)(R₄) und gegebenenfalls noch durch weitere Reste substituiert sind. Unter Einwirkung protonenabspaltender Reagenzien gehen sie in Biaryldianionen über, die mit Phosphorverbindungen der allgemeinen Formeln X-P(R₁)(R₂) oder X-PO(R₁)(R₂)(X ist vorzugsweise ein Halogenatom) zur Reaktion gebracht werden. Auf diesem Weg erhält man unmittelbar oder, falls die Phosphorverbindung X-PO(R₁)(R₂) eingesetzt wurde, nach Reduktion, Diphosphane.

Das vorstehend beschriebene Verfahren eignet sich lediglich zur Herstellung von Diphosphanen, die nicht substituiert sind oder Substituenten enthalten, die gegenüber reduzierend wirkenden Verbindungen inert sind. Hierbei ist zu berücksichtigen, daß ein Reduktionsschritt nicht nur bei Einsatz von Reaktanten des Typs X-P(O)(R₁)(R₂) erforderlich ist. Auch die Bildung des Biaryldianions erfolgt unter reduzierenden Bedingungen, denn die zur Protonenabspaltung eingesetzten Reagenzien wie Alkalihydride oder Alkalialkyle wirken reduzierend. Eine unmittelbare Herstellung Sulfonsäuregruppen enthaltender Biarylphosphane ist daher auf dem vorbeschriebenen Weg nicht möglich, weil die Sulfonsäuregruppen bei der Reaktion von Biaryl- und Phosphorverbindung nicht erhalten bleiben.

Es bestand daher die Aufgabe, ein Verfahren zur Herstellung sulfonierter Diphosphane zu entwickeln, das nicht nur die beschriebenen Probleme löst, sondern auch technisch einfach durchzuführen und darüber hinaus wirtschaftlich ist.

Die vorstehend beschriebene Aufgabe wird gelöst durch ein Verfahren zur Herstellung wasserlöslicher sulfonierter Diphosphane. Es ist dadurch gekennzeichnet, daß man Biarylverbindungen der allgemeinen Formel (I) 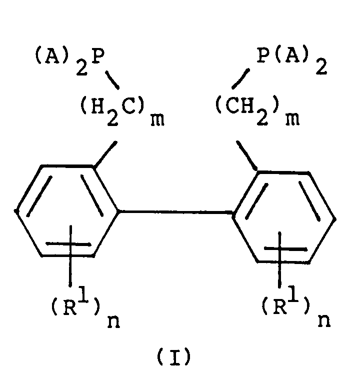
in der A gleich oder verschieden ist und für Alkyl-, Cycloalkyl-, Phenyl-, Tolyl- oder Naphthylreste steht, R¹ gleich oder verschieden ist und Wasserstoff oder Alkyl- oder Alkoxyreste mit 1 bis 14 Kohlenstoffatomen, ferner Cycloalkyl-, Aryl- oder Aroxyreste mit 6 bis 14 Kohlenstoffatomen oder einen anellierten Benzolring bedeutet, m gleich 1 ist und n ebenfalls gleich oder verschieden ist und für ganze Zahlen von 0 bis 4 steht, bei Temperaturen von 0 bis 60 °C mit einer Lösung von Schwefeltrioxid in Schwefelsäure versetzt und darauf unter kräftigem Rühren bei 20 bis 60°C, insbesondere 20 bis 30°C über einen Zeitraum von 1 bis 60 h nachreagiren läßt, das Reaktionsgemisch unter Aufrechterhaltung einer Temperatur von 0 bis 20 °C, insbesondere 0 bis 10 °C mit Wasser verdünnt und anschließend aufarbeitet.

Überraschenderweise gelingt es nach dem erfindungsgemäßen Verfahren, durch Diorganyl-alkylenphosphan-Gruppen (wobei Organyl verkürzt für Alkyl-, Cycloalkyl-, Phenyl-, Tolyl- oder Naphthylreste steht) substituierte Biaryle schonend zu sulfonieren. Besonders bemerkenswert ist, daß die Bildung von Oxidationsprodukten wie Phosphanoxiden weitgehend unterbunden wird. Der Sulfonierungsfortschritt läßt sich auf einfache Weise durch ³¹P-NMR-Spektroskopie verfolgen und kontrollieren.

Die als Ausgangsverbindungen eingesetzten Biaryle enthalten in 2- und 2'-Stellung jeweils einen -(CH₂)ₘP(A)₂-Rest. A und m haben hierbei die oben wiedergegebenen Bedeutungen. Vorzugsweise ist A ein Phenyl-, Tolyl- oder Naphthylrest. Zudem kann das Biarylmolekül durch einen oder mehrere, gleiche oder verschiedene Reste R¹ substituiert sein. Die Bedeutung von R¹ ist weiter oben wiedergegeben. Insbesondere steht R¹ für Wasserstoff, für einen Methyl-, Isopropyl-, Isobutyl-, t-Butyl-, Phenyl- oder Naphthylrest oder einen anellierten Benzolring. m ist 1, n 0 oder 1.

Besondere Bedeutung haben sulfonierte Biarylderivate, die durch Reste R¹ (ausgenommen in der Bedeutung anellierter Benzolring) in 6- und 6'-Stellung substituiert sind. Ihre Anwesenheit hindert die Rotation der beiden substituierten Phenylreste. Daher können Komplexverbindungen, die solche Moleküle als Liganden enthalten, als Katalysatoren für enantioselektive Reaktionen eingesetzt werden.

Zur Herstellung der Phosphor enthaltenden Biarylderivate geht man zweckmäßig von den ihnen zugrundeliegenden Biarylen aus.

Die Biaryle erhält man nach Verfahren des Standes der Technik, z.B. durch Kupplung von Arylgrignardreagenzien mit Arylchlorid, -bromid oder -jodid in Gegenwart von Nickelkatalysatoren. Ein anderer Weg zu ihrer Gewinnung ist die Dehalogenierung von Arylbromiden und -jodiden in Gegenwart von pulverförmigen, aktiven Nickeloxiden.

Zur Einführung des Phosphanrestes in das Biaryl und damit zur Herstellung des Zwischenproduktes für die Gewinnung der sulfonierten Verbindung hat sich eine neue Arbeitsweise sehr bewährt, die von leicht zugänglichen Einsatzstoffen ausgeht. Sie besteht in der Reaktion von 2,2'-Dilithiobiphenyl oder seinen Derivaten der allgemeinen Formel 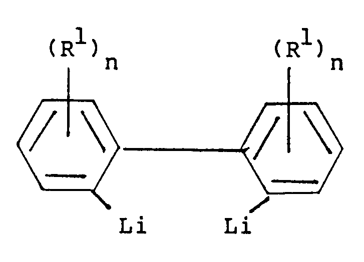
mit einem halogenierten Diarylalkylenphosphan der allgemeinen Formel (A)₂P(CH₂)ₘX (wobei in den Formeln R¹, A, m und n die oben wiedergegebenen Bedeutungen haben und X Halogen ist). Zur Umsetzung suspendiert man die beiden Reaktanten in stöchiometrischen Mengen oder mit dem geringen Überschuß einer der beiden Komponenten in einem inerten organischen Lösungsmittel, z.B. einem aliphatischen Kohlenwasserstoff oder Kohlenwasserstoffgemisch wie Hexan oder Leichtbenzin, in einem aromatischen Kohlenwasserstoff wie Toluol oder in einem Ether wie Tetrahydrofuran und rührt bei Temperaturen von -50 bis 100 °C, vorzugsweise von -20 bis 50 °C. Das im organischen Medium gelöste Reaktionsprodukt wird mit Wasser hydrolysiert. Aus der organischen Phase läßt sich nach Abdestillieren des Lösungsmittels und einem sich gegebenenfalls anschließenden Reinigungsschritt das Diphosphan in hohen Ausbeuten gewinnen.

Zur Sulfonierung kann das Diphosphan ohne vorherige Reinigung eingesetzt werden. Als Sulfonierungsmittel verwendet man erfindungsgemäß Oleum, d.h. eine Lösung von SO₃ in Schwefelsäure. Es ist zweckmäßig, Oleum mit einer SO₃-Konzentration von 20 bis 65 Gew.-%, bezogen auf die Lösung, einzusetzen. Ein wesentliches Merkmal der neuen Arbeitsweise ist die Einhaltung bestimmter Reaktionstemperaturen. Sie betragen 0 bis 60 °C, bevorzugt werden niedrige Temperaturen im Bereich von 0 bis 20 °C. Um sicherzustellen, daß die genannten Temperaturbereiche nicht überschritten werden empfiehlt es sich, das Diphosphan zunächst in konzentrierter Schwefelsäure zu lösen und die Lösung anteilsweise unter Rühren und intensiver Kühlung mit Oleum zu versetzen. Darauf läßt man unter kräftigem Rühren bei 20 bis 60 °C, insbesondere 20 bis 30 °C über einen Zeitraum von 1 bis 60 h nachreagieren. SO₃-Konzentration im Oleum und Dauer des Rührens bestimmen den Sulfonierungsgrad des Diphosphans. Je höher das SO₃-Angebot ist und je länger gerührt wird, desto mehr Sulfonsäuregruppen treten in das Diphosphanmolekül ein. Sobald die Umsetzung beendet ist, wird das Reaktionsgemisch mit Wasser verdünnt aufgearbeitet. Hierzu stehen verschiedene Verfahren zur Verfügung. Nach einer bewährten Arbeitsweise neutralisiert man zunächst die schwefelsaure Lösung. Sowohl bei der Verdünnung des Reaktionsgemisches als auch bei der Neutralisation ist dafür Sorge zu tragen, daß eine Überhitzung nicht eintritt, es hat sich bewährt, Temperaturen von 0 bis 20 °C, insbesondere von 0 bis 10 °C aufrechtzuerhalten. Zur Neutralisation verwendet man die wäßrige Lösung eines Alkalihydroxids, vorzugsweise des Natriumhydroxids. Alkalihydroxid-Konzentrationen von 20 bis 60 Gew.-%, bezogen auf die Lösung, haben sich bewährt. Um eine möglichst vollständige Abscheidung des aus Schwefelsäure und Alkalihydroxid gebildeten Alkalisulfats zu erreichen, ist es empfehlenswert, in nicht zu großer Verdünnung zu arbeiten. Aus dem neutralisierten Reaktionsgemisch scheidet sich Alkalisulfat ab. Es wird abfiltriert und mehrmals mit einem niederen Alkohol, vorzugsweise einem C₁- bis C₄-Alkohol, insbesondere Methanol, gewaschen. Das sulfonierte Diphosphan gewinnt man aus dem Filtrat durch Entfernung des Lösungmittels unter schonenden Bedingungen, z.B. durch Destillation im Vakuum einer Ölpumpe. Zur Reinigung löst man das erhaltene, kristalline Produkt in wenig Wasser, versetzt die Lösung mit einem niederen Alkohol, vorzugsweise einem C₁ - bis C₄-Alkohol, insbesondere Methanol, filtriert und entfernt wiederum schonend das Lösungsmittel.

Nach einem anderen Verfahren, es ist Gegenstand des europäischen Patents 01 07 006, extrahiert man die saure, wäßrige Lösung des Sulfonierungsproduktes mit der Lösung eines wasserunlöslichen Amins in einem wasserunlöslichen organischen Lösungsmittel. Die organische Phase wird abgetrennt und mit der wäßrigen Lösung einer Base in innige Berührung gebracht. Aus der abgetrennten wäßrigen Phase kann darauf das sulfonierte Diphosphan isoliert werden. Die sulfonierten Diphosphane sind farblose bis gelblich gefärbte Pulver. Je nach Sulfonierungsbedingungen enthalten sie 4 bis 6 Sulfonsäuregruppen. Sie lösen sich sehr leicht in Wasser, die Löslichkeit beträgt entsprechend dem Sulfonierungsgrad 0,5 bis 1,5 kg Sulfonierungsprodukt/l Wasser. Aus den Alkalisalzen können z.B. durch Ionenaustausch die freien Säuren und auch die Salze anderer Metalle hergestellt werden.

Das neue Verfahren wird in dem nachfolgenden Beispiel erläutert, es ist jedoch nicht auf die beschriebene Ausführungsformen beschränkt.

### Beispiel

### 1. Herstellung von 2,2'-Bis(diphenylphosphanomethyl)-biphenyl ("BISBI")

In einem mit Rückflußkühler, Tropftrichter und Magnetrührer versehenen 250 ml-Dreihalskolben werden 2.34 g (10 mmol) ClCH₂PPh₂, erhalten nach Langhans et al., Chem. Ber. 123 (1990), 995-999, in 30 ml Hexan suspendiert und unter kräftigem Rühren tropfenweise mit einer Suspension von 0.83 g (5 mmol) 2,2'-Dilithiobiphenyl, erhalten nach J. Organomet. Chem. 228 (1982), 107-118, in 30 ml Hexan versetzt. Anschließend wird etwa 30 min auf 60 °C erwärmt und die Lösung durch Zugabe von 20 ml Toluol abgekühlt. Nach 20 Minuten Rühren wird vorsichtig mit 10 ml Wasser hydrolysiert. Die organische Phase wird in einem Scheidetrichter abgetrennt, dreimal mit je 5 ml Wasser nachgewaschen und im Ölpumpenvakuum bei maximal 30 °C vom Lösungsmittel befreit. Aus dem zurückbleibenden viskosen Öl wird durch Zugabe von 15 ml Ethanol BISBI als weißer Feststoff ausgefällt und über eine Glasfritte G3 abfiltriert. Ausbeute: 70 % der Theorie. Die Ansatzgröße ist ohne Nachteile oder Ausbeuteverluste auf das 100fache zu erhöhen, wenn man Reaktionsgefäße und Reaktionszeiten vergrößert.

### 2. Sulfonierung von BISBI

1 mmol des BISBI werden in 2 ml konzentrierter Schwefelsäure gelöst und bei 0 °C tropfenweise mit 5 ml Oleum (SO₃-Gehalt: 20 bis 65 Gew.-%, bezogen auf die Lösung) versetzt. Nach Erwärmen auf Raumtemperatur (etwa 20°C) rührt man das Reaktionsgemisch mehrere Stunden kräftig, gießt es anschließend vorsichtig auf etwa 100 g Eis und neutralisiert es bei Temperaturen unter 5 °C mit einer wäßrigen NaOH-Lösung (NaOH-Gehalt: 50 Gew.-%, bezogen auf die Lösung). Die entstehende Suspension wird filtriert und das Filtrat in 25 ml Methanol gegeben. Der Filterkuchen wird zweimal mit je 25 ml Methanol nachgewaschen. Die vereinigten Fraktionen werden im Ölpumpenvakuum bis zur Trockene eingeengt, der Rückstand wird in sehr wenig Wasser aufgenommen. Die klare, bernsteinfarbene Lösung spritzt man in 30 ml Methanol, rührt die Suspension, filtriert und engt das Filtrat im Ölpumpenvakuum bis zur Trockene ein. Die Sulfonierungsdauer richtet sich nach dem Reaktionsfortschritt, der durch ³¹P-Kernresonanzspektroskopie in Intervallen von etwa 2 h verfolgt wird.

### Charakterisierung des Reaktionsproduktes

Das nachstehend beschriebene Reaktionsprodukt wurde aus BISBI durch Umsetzung mit 65 %igem Oleum nach 17 h Reaktion erhalten.
³¹P-NMR (161.8 MHz, CD₂Cl₂, 20 °C): δ = -6.8 (s), -7.1 (s), -9.5 (s), -9.6 (s)
IR (KBr, cm⁻¹) ν = 993 (m), 1040 (st), 1098 (m), 1127 (m), 1146 (m), 1195 (sst)
P/S-Verhältnis = 2 : 5.7 (Elementaranalyse)
Löslichkeit: größer 1 g/ml Wasser
Aussehen: gelbliches Pulver

## Patentansprüche

1. Verfahren zur Herstellung wasserlöslicher sulfonierter Diphosphane, dadurch gekennzeichnet, daß man Biarylverbindungen der allgemeinen Formel 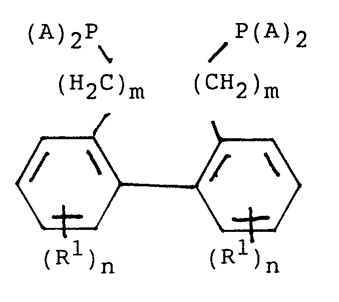 in der A gleich oder verschieden ist und für Alkyl-, Cycloalkyl-, Phenyl-, Tolyl- oder Naphthylreste steht, R¹ gleich oder verschieden ist und Wasserstoff oder Alkyl- oder Alkoxyreste mit 1 bis 14 Kohlenstoffatomen, ferner Cycloalkyl-, Aryl- oder Aroxyreste mit 6 bis 14 Kohlenstoffatomen oder einen anellierten Benzolring bedeutet, m gleich 1 ist und n gleich oder verschieden ist und für ganze Zahlen von 0 bis 4 steht, bei Temperaturen von 0 bis 60°C mit einer Lösung von Schwefeltrioxid in Schwefelsäure versetzt und darauf unter kräftigem Rühren bei 20 bis 60°C, insbesondere 20 bis 30°C über einen Zeitraum von 1 bis 60 h nachreagieren läßt, das Reaktionsgemisch unter Aufrechterhaltung einer Temperatur von 0 bis 20°C, insbesondere 0 bis 10°C mit Wasser verdünnt und anschließend aufarbeitet.

2. Verfahren nach Anspruch 1, dadurch gekennzeichnet, daß die Konzentration des in der Schwefelsäure gelösten Schwefeltrioxids 20 bis 65 Gew.-%, bezogen auf die Lösung, beträgt.

3. Verfahren nach Anspruch 1 oder 2, dadurch gekennzeichnet, daß man das Reaktionsgemisch bei 20 bis 30°C nachreagieren läßt.

4. Verfahren nach einem oder mehreren der Ansprüche 1 bis 3, dadurch gekennzeichnet, daß man das mit Wasser verdünnte Reaktionsgemisch unter Aufrechterhaltung einer Temperatur von 0 bis 20°C, insbesondere 0 bis 10°C, mit einer wäßrigen Alkalihydroxidlösung neutralisiert, sich abscheidendes Alkalisulfat abfiltriert, die wäßrige Lösung unter schonenden Bedingungen einengt, das kristalline Produkt in wenig Wasser löst, die Lösung mit einem niederen Alkohol, vorzugsweise einem C₁- bis C₄-Alkohol, insbesondere Methanol versetzt, filtriert und das wasserlösliche Diphosphan durch Entfernung des Lösungsmittels unter schonenden Bedingungen isoliert.

5. Verfahren nach einem oder mehreren der Ansprüche 1 bis 3, dadurch gekennzeichnet, daß man das mit Wasser verdünnte Reaktionsgemisch mit der Lösung eines wasserunlöslichen Amins in einem wasserunlöslichen organischen Lösungsmittel extrahiert, die organische Phase abtrennt, mit der wäßrigen Lösung einer Base in innige Berührung bringt und aus der abgetrennten wäßrigen Phase das wasserlösliche Diphosphan isoliert.

6. Verfahren nach einem oder mehreren der Ansprüche 1 bis 4, dadurch gekennzeichnet, daß man die zur Sulfonierung eingesetzten Biarylverbindungen der allgemeinen Formel 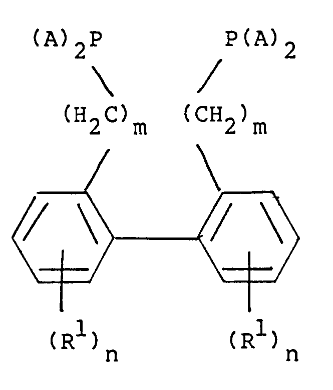 durch Umsetzung einer Dilithiumverbindung der allgemeinen Formel 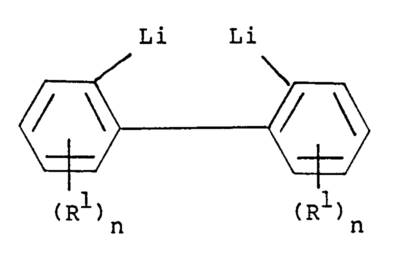 mit einem halogenierten Diarylalkylenphosphan der allgemeinen Formel
X(CH₂)ₘP(A)₂
wobei X für Chlor, Brom oder Jod steht, erhält.

7. Das durch Sulfonierung von 2,2'-Bis(diphenylphosphanomethyl)biphenyl nach Anspruch 1 erhaltene Produkt.

## Claims

1. A process for the preparation of water-soluble sulfonated diphosphines, characterised in that biaryl compounds of the general formula 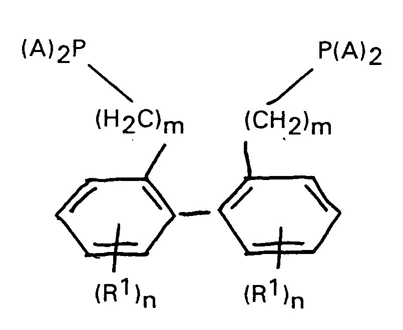 in which A is identical or different and stands for alkyl, cycloalkyl, phenyl, tolyl or naphthyl radicals, R¹ is identical or different and is hydrogen or alkyl or alkoxy radicals having 1 to 14 carbon atoms, furthermore cycloalkyl, aryl or aroxy radicals having 6 top 14 carbon atoms or a fused benzene ring, m is equal to 1 and n is identical or different and stands for integers from 0 to 4, are treated at temperatures from 0 to 60 °C with a solution of sulfur trioxide in sulfuric acid and then allowed to after-react with vigorous stirring at 20 to 60°C, in particular 20 to 30°C over a period of 1 to 60 hours, the reaction mixture is diluted with water, while a temperature of 0 to 20°C, in particular 0 to 10°C, is maintained and the reaction mixture is then worked up.

2. A process according to claim 1, characterised in that the concentration of the sulfur trioxide dissolved in the sulfuric acid is 20 to 65% by weight, related to the solution.

3. A process according to claim 1 or 2, characterised in that the reaction mixture is allowed to after-react at 20 to 30°C.

4. A process according to one or more of claims 1 to 3, characterised in that the reaction mixture diluted with water is neutralised using an aqueous alkali metal hydroxide solution while a temperature of 0 to 20 °C, in particular 0 to 10 °C is maintained, precipitated alkali metal sulfate is filtered off, the aqueous solution is concentrated under mild conditions, the crystalline product is dissolved in a little water, the solution is mixed with a low alcohol, preferably a C₁ to C₄ alcohol, in particular methanol and filtered and the water-soluble diphosphine is isolated by removal of the solvent under mild conditions.

5. A process according to one or more of claims 1 to 3, characterised in that the reaction mixture diluted with water is extracted with the solution of a water-insoluble amine in a water-insoluble organic solvent, the organic phase is removed and brought into intimate contact with the aqueous solution of a base, and the water-soluble diphosphine is isolated from the aqueous phase removed.

6. A process according to one or more of claims 1 to 4, characterised in that the biaryl compounds of the formula 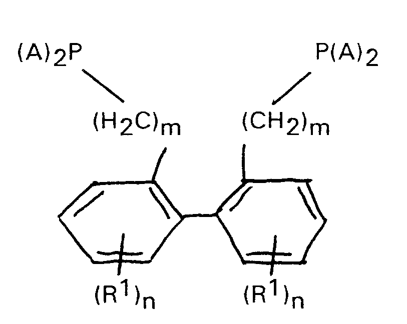 employed for the sulfonation are obtained by reaction of a dilithium compound of the formula 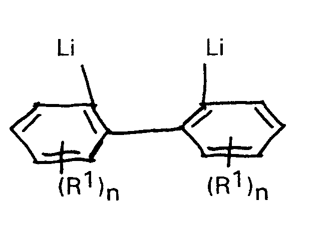 with a halogenated diarylalkylenephosphine of the formula
X(CH₂)ₘP(A)₂
where X is chlorine, bromine or iodine.

7. The product obtained by sulfonation of 2,2'-bis-(diphenylphosphinomethyl)biphenyl according to claim 1.

## Revendications

1. Procédé pour la fabrication de diphosphanes sulfonés solubles dans l'eau, caractérisé en ce que l'on ajoute une solution de trioxyde de soufre dans l'acide sulfurique à des températures de 0 à 60°C à des dérivés de biaryles de formule générale (I) : 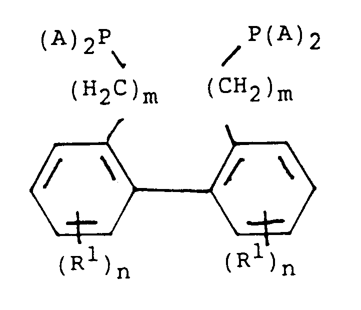 dans laquelle les restes A sont identiques ou différents et représentent des groupes alkyles, cycloalkyles, phényles, tolyles ou naphtyles, les restes R¹ sont identiques ou différents et représentent l'hydrogène ou des restes alkyles ou alcoxy en C₁-C₁₄, en outre des restes cycloalkyles, aryles ou aryloxy en C₆-C₁₄ ou a noyau benzénique, m est égal à 1 et les indices n sont identiques ou différents et représentent des nombres entiers de 0 à 4 et ensuite on fait réagir encore pendant une durée de 1 à 60 h à une température de 20 à 60°C, en particulier dé 20 à 30°C, en agitant vigoureusement, on dilue le mélange de réaction par l'eau en maintenant une température de 0 à 20°C, en particulier de 0 à 10°C, et ensuite on traite le mélange de réaction.

2. Procédé selon la revendication 1, caractérisé en ce que la concentration du trioxyde de soufre dissous dans l'acide sulfurique est de 20 à 65 % en poids, rapportée à la solution.

3. Procédé selon la revendication 1 ou 2, caractérisé en ce que l'on fait réagir encore le mélange de réaction à une température de 20 à 30°C.

4. Procédé selon une ou plusieurs des revendications 1 à 3, caractérisé en ce que l'on neutralise le mélange de réaction dilué par l'eau en maintenant une température de 0 à 20°C, en particulier de 0 à 10°C, par une solution aqueuse d'hydroxyde alcalin, on sépare par filtration le sulfate alcalin qui se dépose, on concentre la solution aqueuse en conditions douces, on dissout le produit cristallisé dans un peu d'eau, on ajoute à la solution un alcool inférieur, de préférence un alcool en C₁-C₄, en particulier le méthanol, on filtre et on isole le diphosphane soluble dans l'eau par élimination solvant en conditions douces.

5. Procédé selon une ou plusieurs des revendications 1 à 3, caractérisé en ce que l'on extrait le mélange de réaction dilué par l'eau par une solution d'une amine insoluble dans l'eau dans un solvant organique insoluble dans l'eau, on sépare la phase organique, on la met en contact intime avec une solution aqueuse d'une base et on isole le diphosphane soluble dans l'eau à partir de la phase aqueuse.

6. Procédé selon un ou plusieurs des revendications 1 à 4, caractérisé en ce que l'on obtient les dérivés de biaryles utilisés pour la sulfonation, de formule générale : 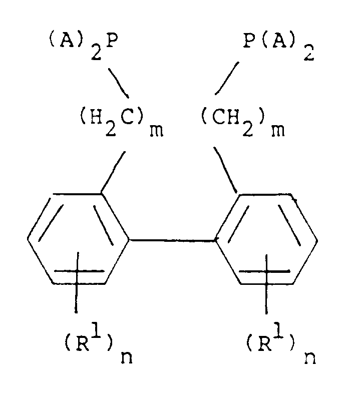 par réaction d'un dérivé dilithié de formule générale : 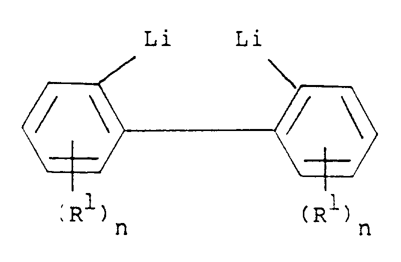 avec un diarylalkylènephosphane halogéné de formule générale : X(CH₂)ₙP(A)₂ dans laquelle X représente le chlore, le brome ou l'iode.

7. Le produit obtenu selon la revendication 1 par sulfonation de 2,2'-bis(diphénylphosphanométhyl)biphényle.
